(19) Europäisches Patentamt / European Patent Office / Office européen des brevets

(11) **EP 2 784 999 A2**

## EUROPEAN PATENT APPLICATION
published in accordance with Art. 153(4) EPC

(12)

(43) Date of publication:
**01.10.2014 Bulletin 2014/40**

(21) Application number: **12732233.7**

(22) Date of filing: **31.01.2012**

(51) Int Cl.:
**H04L 27/00** (2006.01)

(86) International application number:
**PCT/CN2012/070787**

(87) International publication number:
**WO 2012/092891 (12.07.2012 Gazette 2012/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Huawei Technologies Co., Ltd.**
**Shenzhen, Guangdong 518129 (CN)**

(72) Inventor: **SHI, Cao**
**Shenzhen**
**Guangdong 518129 (CN)**

(74) Representative: **Pfenning, Meinig & Partner GbR**
**Patent- und Rechtsanwälte**
**Joachimstaler Strasse 12**
**10719 Berlin (DE)**

(54) **DATA MODULATION METHOD AND DEVICE, AND DATA PROCESSING SYSTEM**

(57) Embodiments of the present invention provide a data modulation method and apparatus. The method includes: recognizing a type of data to be sent, where the data to be sent includes multiple types of data; and carrying at least one type of data in the data to be sent in a highly robust symbol, and carrying other types of data in the data to be sent in a common symbol, where the highly robust symbol is a symbol that has higher anti-noise and anti-interference capabilities than the common symbol. By means of the technical solution in the embodiments of the present invention, depending on the type of the data to be sent, the data to be sent can be carried in the highly robust symbol or the common symbol for sending. Therefore, different types of data are separately carried in different symbols for sending, and efficiency of data management can be effectively improved.

```
┌─────────────────────────────────────────────┐
│      Recognize a type of data to be sent     │  100
└─────────────────────────────────────────────┘
                      │
                      ▼
┌─────────────────────────────────────────────┐
│  Carry at least one type of data in the data │
│  to be sent in a highly robust symbol, and   │  101
│  carry other types of data in the data to be │
│  sent in a common symbol                     │
└─────────────────────────────────────────────┘
```

FIG. 2

EP 2 784 999 A2

**Description**

## TECHNICAL FIELD

Embodiments of the present invention relate to the field of communications technologies, and in particular, to a data modulation method and apparatus and a data processing system.

## BACKGROUND

A digital subscriber line (Digital Subscriber Line, DSL) technology is a high-speed transmission technology that performs data transmission by using a telephone twisted pair, that is, an unshielded twisted pair (Unshielded Twist Pair, UTP).

A variety of currently available DSL (xDSL) technologies are categorized into baseband-based xDSL technologies and passband-based xDSL technologies. A passband transmission-based xDSL uses a frequency division multiplexing technology to enable an DSL and a plain old telephone service (Plain Old Telephone Service, POTS) to coexist on a same twisted pair, where the DSL occupies a high frequency band, the POTS occupies part of a baseband below 4 KHz, and a POTS signal is separated from or combined with a DSL signal by using a splitter (Splitter)/combiner. The passband transmission-based xDSL technology uses a discrete multi-tone modulation (Discrete Multi-Tone Modulation, DMT) technology to perform modulation and demodulation. In the passband transmission-based xDSL technology, a system that provides multiple channels of DSL access is referred to as a DSL access multiplexer (DSL Access Multiplexer, DSLAM). In a user-end DSLAM and a central-office-end DSLAM, a user-end transceiver and a central-office-end transceiver are included correspondingly. Both the user-end transceiver and the central-office-end transceiver include a splitter/combiner and a transceiver unit. The transceiver unit uses a traditional common symbol, which is used to carry data, to carry service data and management data and sends the symbol to a peer end, or receives data carried in the common symbol, where the data includes management data and/or service data.

However, in the existing passband-based xDSL technology, the traditional common symbol, which is used to carry data, is used to carry all data, and all data is processed uniformly, which leads to low efficiency of data management.

## SUMMARY

Embodiments of the present invention provide a data processing method and apparatus and a data processing system to address a defect in the prior art that data carried in a common symbol cannot be separately processed.

An embodiment of the present invention provides a data modulation method, including:

recognizing a type of data to be sent, where the data to be sent includes multiple types of data; and carrying at least one type of data in the data to be sent in a highly robust symbol, and carrying other types of data in the data to be sent in a common symbol, where the highly robust symbol is a symbol that has higher anti-noise and anti-interference capabilities than the common symbol.

An embodiment of the present invention provides a data modulation apparatus, including:

a recognizing module, configured to recognize a type of data to be sent, where the data to be sent includes multiple types of data; and a carrying module, configured to carry at least one type of data in the data to be sent in a highly robust symbol, and carry other types of data in the data to be sent in a common symbol, where the highly robust symbol is a symbol that has higher anti-noise and anti-interference capabilities than the common symbol.

An embodiment of the present invention provides a data processing system, where the data processing system includes a data modulation apparatus and a data receiving apparatus, the data modulation apparatus is the data modulation apparatus described above, and the data receiving apparatus is configured to receive data carried in the highly robust symbol from the data modulation apparatus.

In the data modulation method and apparatus and the data processing system according to the embodiments of the present invention, the type of data to be sent is recognized, where the data to be sent includes multiple types of data; at least one type of data in the data to be sent is carried in the highly robust symbol, and the other types of data in the data to be sent is carried in the common symbol, where the highly robust symbol is a symbol that has higher anti-noise and anti-interference capabilities than the common symbol. By means of the technical solution in the embodiments of the present invention, depending on the type of the data to be sent, the data to be sent can be carried in the highly robust symbol or the common symbol for sending. Therefore, different types of data are separately carried in different symbols for sending, and efficiency of data management can be effectively improved.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG 1 is a structural diagram of an xDSL system in the prior art;
FIG 2 is a flowchart of a data modulation method according to an embodiment of the present invention;
FIG 3 is a flowchart of a data modulation method according to another embodiment of the present invention;
FIG 4 is a flowchart of a data modulation method according to still another embodiment of the present invention;
FIG 5 is a flowchart of a data modulation method according to yet another embodiment of the present invention;
FIG 6 is a tone carrying manner according to an embodiment of the present invention;
FIG 7 is another tone carrying manner according to an embodiment of the present invention;
FIG. 8 is a schematic structural diagram of a data modulation apparatus according to an embodiment of the present invention;
FIG 9 is a schematic structural diagram of a data modulation apparatus according to another embodiment of the present invention; and
FIG 10 is a schematic structural diagram of a data processing system according to an embodiment of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

Currently available DSL technologies include an asymmetrical digital subscriber line (Asymmetrical Digital Subscriber Line, ADSL), a very-high-bit-rate digital subscriber line (Very-high-bit-rate Digital Subscriber Line, VDSL), a digital subscriber line based on an integrated services digital network (ISDN Digital Subscriber Line, IDSL), a single-pair high-bit-rate digital subscriber line (Single-pair High-bit-rate Digital Subscriber Line, SHDSL), and the like. In various digital subscriber line technologies (xDSL), both the IDSL and the SHDSL are baseband transmission-based DSLs, which may be referred to as baseband-based xDSL technologies. Others except the IDSL and the SHDSL are passband transmission-based DSLs, which may be referred to as passband-based xDSL technologies.

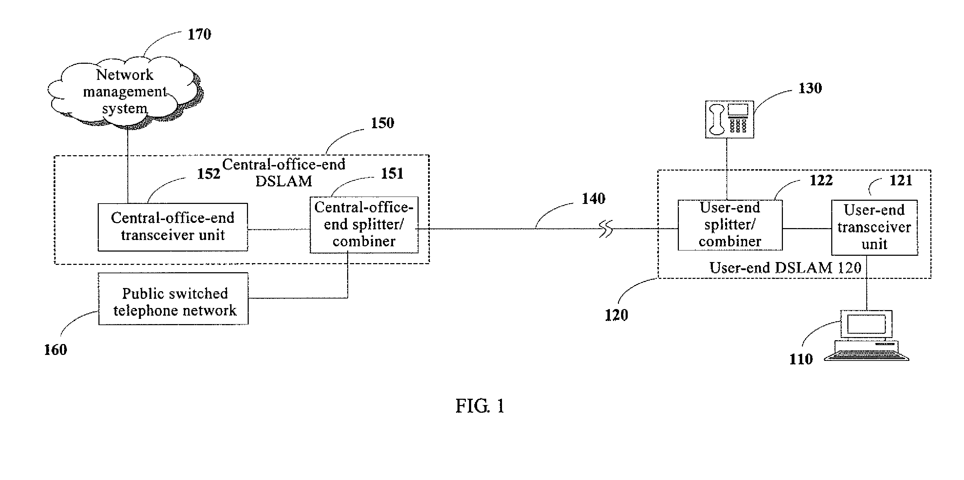

FIG 1 is a structural diagram of an xDSL system in the prior art. As shown in FIG 1, the xDSL system includes a user-end DSLAM 120 and a central-office-end DSLAM 150, where the user-end DSLAM 120 includes a user-end transceiver unit 121 and a user-end splitter/combiner 122. In an uplink direction, the user-end transceiver unit 121 receives a DSL signal from a computer 110, amplifies the received signal, and sends the processed DSL signal to the user-end splitter/combiner 122. The user-end splitter/combiner 122 combines the DSL signal from the user-end transceiver unit 121 with a POTS signal from a telephone terminal 130. The combined signal is transmitted by using multiple channels of UTP 140, and is received by a central-office-end splitter/combiner 151 in the central-office-end DSLAM 150. The central-office-end splitter/combiner 151 splits the received signal, sends the POTS signal in it to a public switched telephone network (PSTN) 160, and sends the DSL signal in it to a central-office-end transceiver unit 152 in the central-office-end DSLAM 150. Then the central-office-end transceiver unit 152 amplifies the received signal, and sends it to a network management system (NMS) 170. In a downlink direction of the signal, the signal is transmitted in a reverse order. In the existing xDSL system, when the user-end transceiver unit 121 sends uplink data or when the central-office-end transceiver unit 152 sends downlink data, all data such as management data and service data is carried in traditional common symbols that are used to carry data, and data with different priorities is not processed separately, which leads to low efficiency of data management. For example, in a case in which a relatively advanced energy saving method is applied, when a data transmission rate is low, it is necessary to choose to stop transmitting data with a lower priority to save power. However, according to the existing carrying manner, all data is carried in a same common symbol, stopping transmitting the data causes transmission of all the data to be stopped, and it is not practicable to implement a selective stop for different types of data to save energy. Therefore, the technical solution in the prior art leads to low efficiency of data management. The following describes a technical solution according to the embodiments of the present invention to resolve the foregoing technical problems.

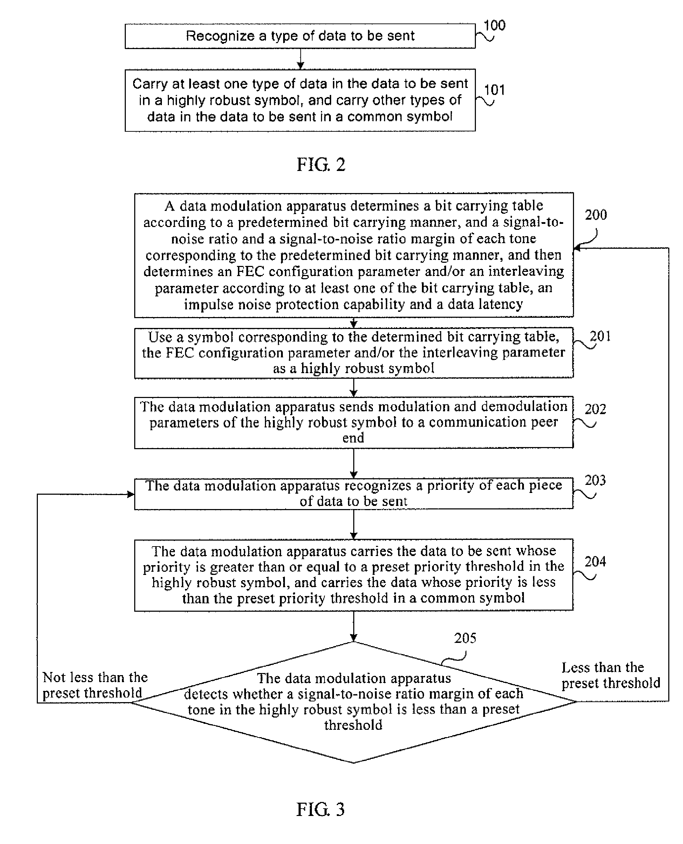

FIG 2 is a flowchart of a data modulation method according to an embodiment of the present invention. As shown in FIG 2, an execution body of the data modulation method in this embodiment is a data modulation apparatus. The data modulation apparatus may be integrated into a user-end or central-office-end transceiver unit in an xDSL system. The data modulation method in this embodiment may specifically include the following steps:

100. Recognize a type of data to be sent.

The data to be sent in this embodiment includes multiple types of data.

101. Carry at least one type of data in the data to be sent in a highly robust symbol, and carry other types of data in the data to be sent in a common symbol.

The highly robust symbol in this embodiment is a symbol that has higher anti-noise and anti-interference capabilities than the common symbol.

The data modulation method in this embodiment is applicable to an orthogonal frequency division multiplexing system such as an xDSL system.

In the data modulation method in this embodiment, the type of the data to be sent is recognized, at least one type of data in the data to be sent is carried in the highly robust symbol that has higher anti-noise and anti-interference capabilities than the common symbol, and the other types of data in the data to be sent is carried in the common symbol. By means of the technical solution in this embodiment, depending on the type of the data to be sent, the data to be sent can be carried in the highly robust symbol or the common symbol for sending. Therefore, different types of data are separately carried in different symbols for sending, and efficiency of data management can be effectively improved.

For example, the type of the data to be sent in the foregoing embodiment may include management data or service data. By means of the technical solution in the foregoing embodiment, the management data can be carried in a highly robust symbol and the service data can be carried in a common symbol. In this way, when a data transmission rate is low, transmission of service data (that is, the data carried in the common symbol) may be stopped to save power and ensure transmission of management data, thereby ensuring response timeliness of a management command. Optionally, the type of the data to be sent in the foregoing embodiment may also include data types categorized by priority levels. For example, by means of the technical solution in the foregoing embodiment, high-priority data may be carried in a highly robust symbol, and low-priority data may be carried in a common symbol. Likewise, such a carrying manner can also achieve the following effect: when the data transmission rate is low, transmission of the low-priority data (that is, the data carried in the common symbol) may be stopped to save power and ensure transmission of the high-priority data, thereby ensuring normal provisioning of a high-priority service. The data in this solution may include management data and/or service data.

The two solutions described above give only two examples of the type of the data to be sent. In a practical application, different types of data may also be defined according to specific conditions, and one or more types of data that can be managed uniformly is carried in one symbol (common symbol or highly robust symbol), thereby facilitating data management and effectively improving efficiency of the data management. Meanwhile, according to the type of the data to be sent, the one or more types of data may be carried in a common symbol or a highly robust symbol. For example, because the highly robust symbol has a higher anti-interference capability than the common symbol, one or more types of data that is relatively important or has a low anti-interference capability may be carried in the highly robust symbol, and other types of data is carried in the common symbol. For example, by means of the manner in this embodiment of the present invention, a crosstalk measurement signal and a signal-to-noise ratio detection signal may be treated as two independent data types and may be separately carried in the highly robust symbol, thereby reducing symbols exclusively used to carry the crosstalk measurement signal or the signal-to-noise ratio detection signal in the prior art and improving efficiency of symbol management, which is detailed in subsequent embodiments. For another example, a voice over Internet Protocol (VoiceoverInternet Protocol, VoIP) packet is sensitive to a latency and bit error rate. VoIP data is generally encapsulated by using the Real-Time Transport Protocol (Real-time transport protocol, RTP). RTP packets among packets may be recognized and carried in the highly robust symbol.

The foregoing solutions are only several optional implementation solutions of the present invention. In a practical application, more application scenarios of the embodiments of the present invention may further be deduced from the foregoing solutions, and details are not described herein exhaustively.

It should be noted that the highly robust symbol in the foregoing embodiment is similar to the ordinary symbol except for higher anti-noise and anti-interference capabilities, and has at least one of a bit carrying table, an average signal-to-noise ratio margin, a forward error correction (Forward Error Correction, FEC) configuration parameter, and an interleaving parameter. The average signal-to-noise ratio margin of the highly robust symbol is an average value of signal-to-noise ratio margins of all tones of the highly robust symbol. One or two of modulation and demodulation parameters of the highly robust symbol, that is, the bit carrying table, the FEC configuration parameter, and the interleaving parameter, may be the same as those of the common symbol. In other words, one of the modulation and demodulation parameters of the highly robust symbol must be different from the modulation and demodulation parameters of the common symbol.

Optionally, on the basis of the foregoing embodiment, determining "a highly robust symbol" in step 100 in the foregoing embodiment may specifically include: using a symbol with modulation and demodulation parameters that can identify higher anti-noise and anti-interference capabilities as the highly robust symbol. For example, the modulation and demodulation parameters include a bit carrying table, a forward error correction configuration parameter and/or an interleaving parameter.

In this case, correspondingly, the data modulation method in the foregoing embodiment may further include: sending the modulation and demodulation parameters of the highly robust symbol to a communication peer end, so that the communication peer end can receive, according to the modulation and demodulation parameters of the highly robust symbol, the data carried in the highly robust symbol. FIG. 3 is a flowchart of a data modulation method according to another embodiment of the present invention. The data modulation method in this embodiment is a more detailed description about the technical solution in the present invention on the basis of the embodiment shown in FIG 2. As shown in FIG. 3, the data modulation method in this embodiment may specifically include the following steps:

200. A data modulation apparatus determines a bit carrying table according to a predetermined bit carrying manner, and a signal-to-noise ratio and a signal-to-noise ratio margin of each tone corresponding to the predetermined bit carrying manner, and then determines an FEC configuration parameter and/or an interleaving parameter according to at least one of the bit carrying table, an impulse noise protection capability and a data latency.

201. Use a symbol corresponding to the determined bit carrying table, the FEC configuration parameter and/or the interleaving parameter as a highly robust symbol.

For example, the predetermined bit carrying manner may be to use 2 bits to carry data. Whether the bit carrying table includes each tone is determined according to the signal-to-noise ratio and the signal-to-noise ratio margin of each tone. When a difference between the signal-to-noise ratio and the signal-to-noise ratio margin of a tone is greater than 6 dB, it is determined that the tone may use the predetermined bit carrying manner. In this way, the bit carrying table may include the tone and the 2-bit data carried in the tone. The bit carrying table may be determined by determining each tone corresponding to the predetermined bit carrying manner in the foregoing way. Then, the FEC configuration parameter and/or the interleaving parameter may be determined according to at least one of the bit carrying table, the impulse noise protection capability, and the data latency.

Refer to the following example, which includes the following steps:

(1) Determine a tone set that can carry 2 bits, that is, the bit carrying table:

The number of bits that can be carried in an $i^{th}$ tone is:

$$B_i = \begin{cases} 2 & \log_2(1+\dfrac{SNR_i}{\Gamma + SNR\_M - Coding\_gain}) \geq 2 \\ 0 & \log_2(1+\dfrac{SNR_i}{\Gamma + SNR\_M - Coding\_gain}) < 2 \end{cases}$$

$B_i$ is the number of bits carried in the $i^{th}$ tone, $SNR_i$ is a signal-to-noise ratio of the $i^{th}$ tone, SNR_M is an expected signal-to-noise ratio margin, where all tones have the same expected signal-to-noise ratio margin, r is an implementation error, for example, 9.8 dB, and *Coding_gain* is an empirical value of a coding gain, for example, 7.5 dB.

(2) Determine the FEC configuration parameter and the interleaving parameter according to at least one of the tone set, the impulse noise protection capability, and the data latency.

Selection of the FEC configuration parameter and the interleaving parameter depends on requirements of the impulse noise protection capability INP) and the data latency. For example,

the data latency *Latency* is obtained by using the following formula:

$$Latency = \frac{8 \times (D \times I)}{L} * Symbol\_period \; ;$$

the impulse noise protection capability *INP* is obtained by using the following formula:

$$INP = \frac{8 \times (D \times I) \times (\frac{R}{2 \times N_{FEC}})}{L} = \frac{Latency}{Symbol\_period} * (\frac{R}{2 \times N_{FEC}})$$

where D indicates an interleaving depth (the number of bytes), I indicates a size of an interleaving block (the number of bytes), L indicates the number $L = \sum_{1}^{N} B_i$ of bits that can be carried in each symbol, $B_i$ is the number of bits carried in the ith tone, and $B_i$ is determined according to the bit carrying table. $N_{FEC}$ indicates a length of a Reed-Solomon code, R indicates a length of redundant information of the Reed-Solomon code, and *Symbol_period* indicates a latency length *Latency* of the symbol.

For example, *Symbol_period* is 0.25 ms, which requires that the impulse noise protection capability should be greater than 2 and the latency should be less than 4 ms.

The bit carrying table has been obtained according to the foregoing method, for example, the number L of bits that can be carried in each symbol is calculated to be 1000; in this case, it may be selected that the data latency is 3 ms and the INP is 3: It can be calculated that:

$$D \times I = \frac{L}{8} * \frac{Latency}{Symbol\_period} = \frac{1000}{8} * \frac{3}{0.25} = 1500$$

$$\frac{R}{N_{FEC}} = 2 * INP * \frac{Symbol\_period}{Latency} = \frac{1}{2}$$

Therefore, it may be selected that D is 30, I is 51, $N_{FEC}$ is 204, R is 102, and the final data latency is:

$$Latency = \frac{8 \times (D \times I)}{L} * Symbol\_period = 3.06ms$$

$$INP = \frac{8 \times (D \times I) \times (\frac{R}{2 \times N_{FEC}})}{L} = \frac{Latency}{Symbol\_period} * (\frac{R}{2 \times N_{FEC}}) = 3.06$$

The FEC configuration parameter and the interleaving parameter may be determined according to the foregoing data latency *Latency* and the impulse noise protection capability *INP.*

The FEC configuration parameter and the interleaving parameter are determined according to at least one of the bit carrying table, the impulse noise protection capability, and the data latency of the highly robust symbol, and further, the symbol corresponding to the determined bit carrying table, the FEC configuration parameter and/or the interleaving parameter is used as the highly robust symbol.

Step 200 and step 201 are a specific implementation process in which the data modulation apparatus determines the modulation and demodulation parameters of the highly robust symbol. These steps may occur in a process of establishing a data path. After the data modulation apparatus obtains the bit carrying table, the FEC configuration parameter and/or the interleaving parameter of the highly robust symbol, the following steps may be further included:

202. The data modulation apparatus sends the modulation and demodulation parameters of the highly robust symbol to a communication peer end.

That is, the data modulation apparatus sends the bit carrying table, the FEC configuration parameter and/or the interleaving parameter of the highly robust symbol to the communication peer end, so that the data carried in the highly robust symbol can be received according to the modulation and demodulation parameters of the highly robust symbol.

203. The data modulation apparatus recognizes a priority of each piece of data to be sent.

In this embodiment, it is assumed that the type of the data to be sent is the priority of the data. In a practical application, the data type may also be other types. In this embodiment, the data to be sent may be management data and/or service data.

204. The data modulation apparatus carries the data to be sent whose priority is greater than or equal to a preset priority threshold in the highly robust symbol, and carries the data whose priority is less than the preset priority threshold in a common symbol.

By using step 204, the data modulation apparatus may implement carrying of each piece of the data to be sent, and then send each piece of the data to be sent to the communication peer end in a corresponding carrying manner. The communication peer end may receive, according to the received modulation and demodulation parameters of the highly robust symbol, the data carried in the highly robust symbol, and may further receive, according to the modulation and demodulation parameters of the common symbol, the data carried in the common symbol.

205. The data modulation apparatus detects whether a signal-to-noise ratio margin of each tone in the highly robust symbol is less than a preset threshold. When the signal-to-noise ratio margin of a certain tone is less than the corresponding preset threshold, the process returns to step 200, and the data modulation apparatus determines the modulation and demodulation parameters of the highly robust symbol again; otherwise, when the signal-to-noise ratio margin of none of the tones in the highly robust symbol is less than the preset threshold, the process returns to step 203, and the data modulation apparatus continues to recognize the priority of each piece of the data to be sent, carries each piece of the data to be sent in the manner described in step 204, and sends each piece of the data to be sent.

A method for calculating the signal-to-noise ratio margin of the $i^{th}$ tone is:

$$SNR\_M_i = \frac{SNR_i}{2^{B_i} - 1} - \Gamma$$

where $\Gamma$ is an implementation error, which is 9.8 dB, $B_i$ is the number of bits carried in the $i^{th}$ tone, and $SNR_i$ is the signal-to-noise ratio of the $i^{th}$ tone. For details, reference may be made to the prior art.

In the data modulation manner in this embodiment, the priority of the data to be sent is recognized; the data to be sent whose priority is greater than or equal to the preset priority threshold is carried in the highly robust symbol, and the data whose priority is less than the preset priority threshold is carried in the common symbol. By means of the technical solution in this embodiment, the data to be sent whose priority is greater than or equal to the preset priority threshold and the data to be sent whose priority is less than the preset priority threshold may be separately carried, thereby implementing management on the data with different priorities and effectively improving efficiency of data management.

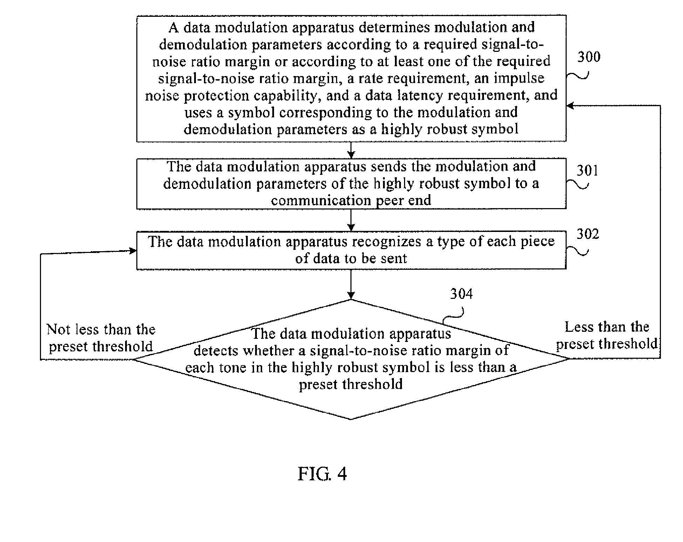

FIG 4 is a flowchart of a data modulation method according to still another embodiment of the present invention. The data modulation method in this embodiment is a more detailed description about the technical solution in the present invention on the basis of the embodiment shown in FIG 2. As shown in FIG. 4, the data modulation method in this embodiment may specifically include the following steps:

300. A data modulation apparatus determines modulation and demodulation parameters according to a required signal-to-noise ratio margin or according to at least one of the required signal-to-noise ratio margin, a required rate, an impulse noise protection capability, and a required data latency, and uses a symbol corresponding to the modulation and demodulation parameters as a highly robust symbol.

For example, the data modulation apparatus may specifically determine the modulation and demodulation parameters according to the required signal-to-noise ratio margin, or determine the modulation and demodulation parameters according to at least one of the required signal-to-noise ratio margin, the required rate, the impulse noise protection capability, and the required data latency (that is, at least two parameters in total).

The following describes several examples in detail.

Example 1 is a manner of determining a bit carrying table, an FEC configuration parameter and an interleaving parameter. Specifically, the following steps may be included:

(1) Determine the bit carrying table.

The number of bits that can be carried in an $i^{th}$ tone is:

$$B_i = \begin{cases} \left\lfloor \log_2(1 + \dfrac{SNR_i}{\Gamma + SNR\_M --Coding\_gain}) \right\rfloor & \log_2(1 + \dfrac{SNR_i}{\Gamma + SNR\_M - Coding\_gain}) \geq 1 \\ 0 & \log_2(1 + \dfrac{SNR_i}{\Gamma + SNR\_M - Coding\_gain}) < 1 \end{cases}$$

$B_i$ is the number of bits carried in the $i^{th}$ tone, $SNR_i$ is a signal-to-noise ratio of the $i^{th}$ tone, SNR_M is an expected signal-to-noise ratio margin, where all tones have the same expected signal-to-noise ratio margin, r is an implementation error, for example, 9.8 dB, and *Coding_gain* is an empirical value of a coding gain, for example, 7.5 dB.

For details about step (2), reference may be made to step (2) in step 201 in the embodiment shown in FIG 2.

In this way, the bit carrying table, the FEC configuration parameter, and the interleaving parameter are determined, that is, the modulation and demodulation parameters are determined, and therefore the symbol corresponding to the determined modulation and demodulation parameters may be used as the highly robust symbol. Example 2 is another manner of determining the bit carrying table, the FEC configuration parameter and the interleaving parameter. Specifically, the following steps may be included:

(1) Determine the bit carrying table:
The number of bits that can be carried in an $i^{th}$ tone is:

$$B_i = \begin{cases} \left\lfloor \log_2(1 + \dfrac{SNR_i}{\Gamma + SNR\_M --Coding\_gain}) \right\rfloor & \log_2(1 + \dfrac{SNR_i}{\Gamma + SNR\_M - Coding\_gain}) \geq 1 \\ 0 & \log_2(1 + \dfrac{SNR_i}{\Gamma + SNR\_M --Coding\_gain}) < 1 \end{cases}$$

$B_i$ is the number of bits carried in the $i^{th}$ tone, $SNR_i$ is a signal-to-noise ratio of the $i^{th}$ tone, SNR_M is an expected signal-to-noise ratio margin, where all tones have the same expected signal-to-noise ratio margin, $\Gamma$ is an implementation error, for example, 9.8 dB, and *Coding_gain* is an empirical value of a coding gain, for example, 7.5 dB.

(2) Refer to step (2) in the foregoing example (1), and details are not described herein again.

(3) Update *Coding_gain'* according to the FEC parameter. If *Coding_gain'* and *Coding_gain* are less than a specified threshold, for example, 0.5 dB, return to step (1) to start the determining again, that is, determine the modulation and demodulation parameters, until the bit carrying table, the FEC configuration parameter, and the interleaving parameter that meet requirements are obtained, so that the symbol corresponding to the determined modulation and demodulation parameters may be used as the highly robust symbol.

Example 3 is still another manner of determining the bit carrying table, the FEC configuration parameter and the interleaving parameter. Specifically, the following steps may be included:

Step (1): Determine the bit carrying table:

The number of bits that can be carried in an $i^{th}$ tone is:

$$B_i = \begin{cases} \left\lfloor \log_2(1 + \dfrac{SNR_i}{\Gamma + SNR\_M - Coding\_gain}) \right\rfloor & \log_2(1 + \dfrac{SNR_i}{\Gamma + SNR\_M - Coding\_gain}) \geq 1 \\ 0 & \log_2(1 + \dfrac{SNR_i}{\Gamma + SNR\_M - Coding\_gain}) < 1 \end{cases}$$

$B_i$ is the number of bits carried in the ith tone, $SNR_i$ is a signal-to-noise ratio of the ith tone, SNR_M is an expected signal-to-noise ratio margin, where all tones have the same expected signal-to-noise ratio margin, r is an implementation error, for example, 9.8 dB, and *Coding_gain* is an empirical value of a coding gain, for example, 7.5 dB.

(2) Refer to step (2) in the foregoing example (1), and details are not described herein again.

(3) Calculate a net rate: $R_{net} = L * \dfrac{N-R}{N} * SymbolRate$.

If $R_{net}$ is greater than a target rate $R_{net0}$, the procedure is complete.

If $R_{net}$ is less than the target rate $R_{net0}$, return to step (2), and increase $\dfrac{N-R}{N}$ by adjusting R and N.

If R and N that meet requirements of the data latency, the impulse noise protection capability and the net rate cannot be obtained in step (2), quit the calculation immediately and return failure information. The target rate $R_{net0}$ is the required rate. Example 4 is yet another manner of determining the bit carrying table, the FEC configuration parameter and the interleaving parameter. Specifically, the following steps may be included:

(1) Determine the bit carrying table:

The number of bits that can be carried in an ith tone is:

$$B_i = \begin{cases} \left\lfloor \log_2(1 + \dfrac{SNR_i}{\Gamma + SNR\_M - Coding\_gain}) \right\rfloor & \log_2(1 + \dfrac{SNR_i}{\Gamma + SNR\_M - Coding\_gain}) \geq 1 \\ 0 & \log_2(1 + \dfrac{SNR_i}{\Gamma + SNR\_M - Coding\_gain}) < 1 \end{cases}$$

$B_i$ is the number of bits carried in the ith tone, $SNR_i$ is a signal-to-noise ratio of the ith tone, SNR_M is an expected signal-to-noise ratio margin, where all tones have the same expected signal-to-noise ratio margin, r is an implementation error, for example, 9.8 dB, and *Coding_ gain* is an empirical value of a coding gain, for example, 7.5 dB.

(2) Refer to step (2) in the foregoing example (1), and details are not described herein again.
(3) Update *Coding_gain'* according to the FEC parameter. If *Coding_gain'* and *Coding_gain* are less than a specified threshold, for example, 0.5 dB, return to step (1).

(4) Calculate a net rate: $R_{net} = L * \dfrac{N-R}{N} * SymbolRate$.

If $R_{net}$ is greater than a target rate $R_{net0}$, the procedure is complete.

If $R_{net}$ is less than the target rate $R_{net0}$, return to step (2), increase $\dfrac{N-R}{N}$ by adjusting R and N, and start to determine the bit carrying table, the FEC configuration parameter and/or the interleaving parameter again, that is, determine the modulation and demodulation parameters, until the bit carrying table, the FEC configuration parameter and/or the interleaving parameter that meet requirements of the data latency, the impulse noise protection capability, and a rate are obtained, so that the symbol corresponding to the determined modulation and demodulation parameters may be used as the highly robust symbol.

If R and N that meet requirements of the data latency, the impulse noise protection capability and a rate cannot be obtained in step (2), quit the calculation immediately and return failure information. The target rate $R_{net0}$ is the required rate.

The foregoing manners are only several different implementation manners. In a practical application, other implementation manners of "determining the bit carrying table, the FEC configuration parameter, and/or the interleaving parameter of the highly robust symbol according to the required signal-to-noise ratio margin or according to at least one of the required signal-to-noise ratio margin of the highly robust symbol, the required rate of the highly robust symbol, the impulse noise protection capability of the highly robust symbol, and the required data latency of the highly robust symbol" in this embodiment may be deduced from the foregoing manners, and details are not described herein exhaustively.

Likewise, step 300 is also a specific implementation process in which the data modulation apparatus determines the modulation and demodulation parameters of the highly robust symbol. This step may occur in a process of establishing a data path. After the data modulation apparatus obtains the bit carrying table, the FEC configuration parameter and/or the interleaving parameter of the highly robust symbol, the following step 301 may be further included:

301. The data modulation apparatus sends the modulation and demodulation parameters of the highly robust symbol to a communication peer end.

That is, the data modulation apparatus sends the bit carrying table, the FEC configuration parameter and/or the interleaving parameter of the highly robust symbol to the communication peer end, so that the data carried in the highly robust symbol can be received according to the modulation and demodulation parameters of the highly robust symbol.

302. The data modulation apparatus recognizes the type of each piece of data to be sent.

In this embodiment, it is assumed that the type of the data to be sent is service data or management data. In a practical application, the data type may also be other types. 303. The data modulation apparatus carries the management data in each piece of the data to be sent in the highly robust symbol, and carries the service data in each piece of the data to be sent in a common symbol.

Because the management data directly affects response timeliness of a management command and working efficiency of an entire system, the technical solution in the present invention is described in this embodiment by an example in which the management data is carried in the highly robust symbol and ordinary data is carried in the common symbol.

By using step 303, the data modulation apparatus may carry each piece of the data to be sent, and then send each piece of the data to be sent to the communication peer end in a corresponding carrying manner. The communication peer end may receive, according to the received modulation and demodulation parameters of the highly robust symbol, the data carried in the highly robust symbol, and may further receive, according to the modulation and demodulation parameters of the common symbol, the data carried in the common symbol.

304. The data modulation apparatus detects whether a signal-to-noise ratio margin of each tone in the highly robust symbol is less than a preset threshold. When the signal-to-noise ratio margin of a certain tone is less than the corresponding preset threshold, the data modulation apparatus returns to step 300 to determine the modulation and demodulation parameters of the highly robust symbol again; otherwise, when the signal-to-noise ratio margin of none of the tones in the highly robust symbol is less than the preset threshold, the data modulation apparatus returns to step 302 to continue to recognize a priority of each piece of the data to be sent, carries each piece of the data to be sent in the manner described in step 303, and sends each piece of the data to be sent.

In the data modulation manner in this embodiment, the type of the data to be sent is recognized, at least one type of data in the data to be sent is carried in the highly robust symbol that has higher anti-noise and anti-interference capabilities than the common symbol, and other types of data in the data to be sent is carried in the common symbol. By means of the technical solution in this embodiment, the management data and the service data may be separately carried. For example, when a data transmission rate is low, transmission of the service data in the common symbol may be stopped, and transmission of the management data in the highly robust symbol is retained, thereby not only effectively implementing energy saving but also improving efficiency of data management.

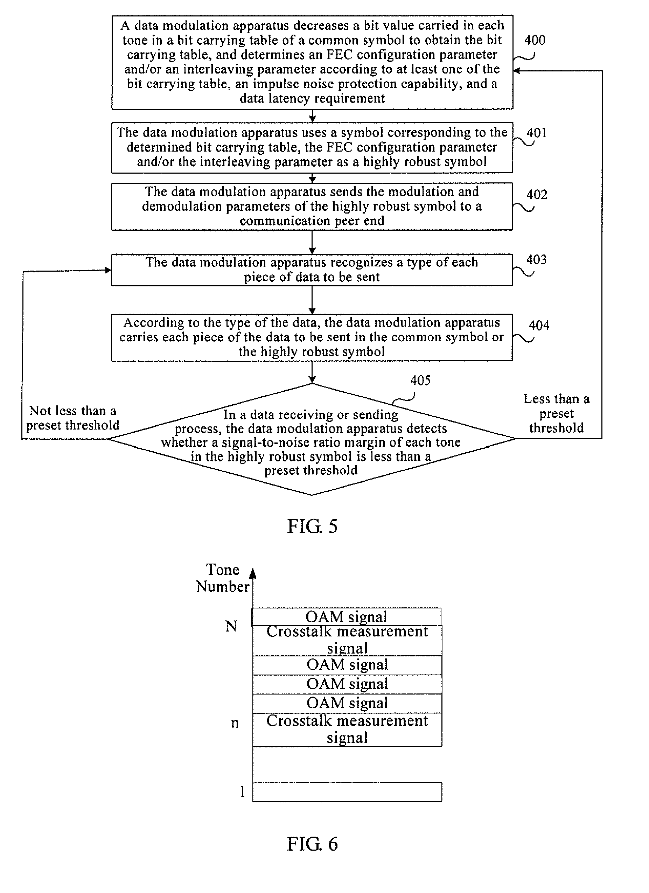

FIG 5 is a flowchart of a data modulation method according to yet another embodiment of the present invention. The data modulation method in this embodiment is a more detailed description about the technical solution in the present invention on the basis of the embodiment shown in FIG 2. As shown in FIG 5, the data modulation method in this embodiment may specifically include the following steps:

400. A data modulation apparatus decreases a bit value carried in each tone in a bit carrying table of a common symbol to obtain the bit carrying table, and determines an FEC configuration parameter and/or an interleaving parameter according to at least one of the bit carrying table, an impulse noise protection capability, and a required data latency.

401. The data modulation apparatus uses a symbol corresponding to the obtained bit carrying table, the FEC configuration parameter and/or the interleaving parameter as a highly robust symbol.

The bit carrying table of the common symbol includes an identifier of each tone that can carry data, and the number of bits of the data that can be carried in each tone. In this embodiment, the bit carrying table of the highly robust symbol can be obtained by decreasing the bit value carried in each tone by a certain bit value.

For a detailed process of determining the FEC configuration parameter and/or the interleaving parameter according to the bit carrying table in step 400, reference may be made to the description about the embodiment shown in FIG. 3 or FIG. 4, and details are not described herein again.

Step 400 is a specific implementation process in which the data modulation apparatus determines the modulation and demodulation parameters of the highly robust symbol. This step may occur in a process of establishing a data path. After the data modulation apparatus obtains the bit carrying table, the FEC configuration parameter and/or the interleaving parameter of the highly robust symbol, the following step may be further included:

402. The data modulation apparatus sends the modulation and demodulation parameters of the highly robust symbol to a communication peer end.

That is, the data modulation apparatus sends the bit carrying table, the FEC configuration parameter and/or the interleaving parameter of the highly robust symbol to the communication peer end, so that the data carried in the highly robust symbol can be received according to the modulation and demodulation parameters of the highly robust symbol.

403. The data modulation apparatus recognizes a type of each piece of data to be sent. In this embodiment, step 403 is primarily used to recognize whether the type of the data to be sent is an RTP packet, a crosstalk measurement signal, a signal-to-noise ratio (SNR) detection signal or common service data.

404. According to the type of the data, the data modulation apparatus carries each piece of the data to be sent in the common symbol or the highly robust symbol.

For example, in this embodiment, the RTP packet, the crosstalk measurement signal and the SNR detection signal are carried in the highly robust symbol, and the common service data is carried in the common symbol. By using step 403, the data modulation apparatus may carry each piece of the data to be sent, and then send each piece of the data to be sent to the communication peer in a corresponding carrying manner. The communication peer end may receive, according to the received modulation and demodulation parameters of the highly robust symbol, the data carried in the highly robust symbol, and may further receive, according to the modulation and demodulation parameters of the common symbol, the data carried in the common symbol.

405. In a data receiving or sending process, the data modulation apparatus detects whether a signal-to-noise ratio margin of each tone in the highly robust symbol is less than a preset threshold. When the signal-to-noise ratio margin of a certain tone is less than the corresponding preset threshold, the data modulation apparatus returns to step 400 to determine the modulation and demodulation parameters of the highly robust symbol again; otherwise, when the signal-to-noise ratio margin of none of the tones in the highly robust symbol is less than the preset threshold, the data modulation apparatus returns to step 403 to continue to recognize a priority of each piece of the data to be sent, carries each piece of the data to be sent in the manner described in step 404, and sends each piece of the data to be sent.

In the data modulation manner in this embodiment, the type of the data to be sent is recognized, at least one type of data in the data to be sent is carried in the highly robust symbol that has higher anti-noise and anti-interference capabilities than the common symbol, and other types of data in the data to be sent is carried in the common symbol. By means of the technical solution in this embodiment, depending on the type of the data to be sent, the data to be sent can be carried in the highly robust symbol or the common symbol, thereby implementing separate management on the data transmitted in the highly robust symbol and the data carried in the common symbol, and effectively improving efficiency of data management.

It should be noted that the highly robust symbol and the common symbol in the foregoing embodiment may be transmitted alternately. For example, one of N symbols in uplink and downlink frames may be a highly robust symbol and is sent periodically. The first K symbols in the uplink and downlink frames are highly robust symbols and others are common symbols; or the last K symbols in the uplink and downlink frames are highly robust symbols and others are common symbols.

It should be noted that in the prior art, a syn symbol is also used to carry a crosstalk measurement signal (Crosstalk measure signal). After the highly robust symbol is determined according to the foregoing embodiment of the present invention, the highly robust symbol may further be used to carry the crosstalk measurement signal in the manner described in the embodiment shown in FIG. 5. For example, the crosstalk measurement signal is carried in the highly robust symbol for sending.

Because the highly robust symbol includes multiple tones, the crosstalk measurement signal may be specifically carried in a tone (for example, one or more tones) of the highly robust symbol for sending.

Alternatively, it can be learnt from the technical solution in the foregoing embodiment that, a bit carrying table includes identifiers of some tones that can carry data and the number of bits that can be carried in each tone. Correspondingly, tones that do not belong to the tones in the bit carrying table (for example, zero-bit tones and other tones that do not meet requirements of the bit carrying table) further exist in the highly robust symbol. The data modulation apparatus may carry the crosstalk measurement signal in a corresponding tone such as a zero-bit tone in the highly robust symbol for sending, where the corresponding tone does not belong to the bit carrying table.

Optionally, after the signal-to-noise ratio detection signal is carried in the highly robust symbol determined in the foregoing embodiment, the SNR detection signal may also be carried in the tone of the highly robust symbol for sending, as described in the embodiment shown in FIG 5. Alternatively, the SNR detection signal is carried in a corresponding bit tone in the highly robust symbol for sending, where the corresponding bit tone does not belong to the bit carrying table of the highly robust symbol.

By means of the foregoing embodiment, crosstalk measurement signals or SNR detection signals may be carried in the highly robust symbol, thereby reducing symbols used to carry the crosstalk measurement signals or the SNR detection signals in the prior art, effectively reducing the number of symbols in communication, and effectively improving efficiency of symbol management.

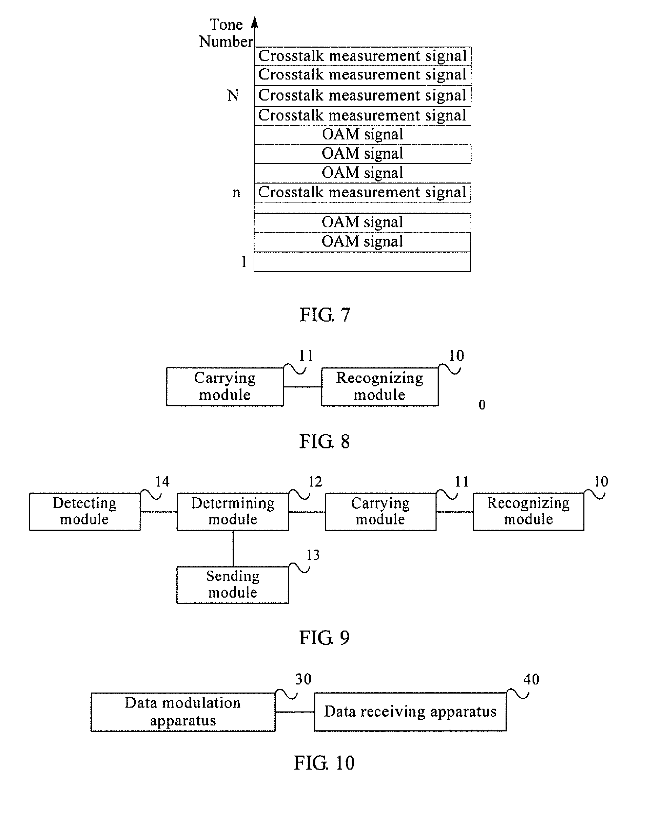

According to the foregoing solution, two tone carrying manners shown in FIG 6 and FIG 7 can be obtained. As shown in FIG. 6 and FIG. 7, a vertical coordinate indicates a sequence number of a tone (Tone Number). Each horizontal box in a horizontal direction indicates a tone. As shown in FIG. 6, K tones of every L tones are used to carry crosstalk measurement signals or SNR detection signals. As shown in FIG 7, a certain segment of consecutive tones are used to carry the crosstalk measurement signals or the SNR detection signals. In FIG. 6 and FIG 7, it is assumed that the tones are used to carry crosstalk measurement signals. As shown in FIG. 6 and FIG 7, the tones carry operation, administration and maintenance (OAM) signals.

The embodiments shown in FIG 4, FIG. 5, and FIG 6 describe the technical solution in the present invention separately by using different data types as examples. In a practical application, the data types in the three embodiments may also be used together, and details are not described herein again.

All or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

FIG 8 is a schematic structural diagram of a data modulation apparatus according to an embodiment of the present invention. The data modulation apparatus in this embodiment may be placed in a user-end or central-office-end transceiver module in an xDSL model. As shown in FIG. 8, the data modulation apparatus in this embodiment may include a recognizing module 10 and a carrying module 11.

The recognizing module 10 is configured to recognize a type of data to be sent, where the data to be sent includes multiple types of data. The carrying module 11 is connected to the recognizing module 10, and the carrying module 11 is configured to carry at least one type of data in the data to be sent in a highly robust symbol, where the at least one type of data is recognized by the recognizing module 10, and carry other types of data in the data to be sent in a common symbol, where the highly robust symbol is a symbol that has higher anti-noise and anti-interference capabilities than the common symbol.

The method used by the data modulation apparatus in this embodiment to implement data modulation by using the foregoing modules is the same as implementation mechanisms of the foregoing related method embodiments. For details, reference may be made to the description in the related method embodiments, and details are not described herein again.

The data modulation apparatus in this embodiment uses the foregoing modules to recognize the type of the data to be sent, carries at least one type of data in the data to be sent in the highly robust symbol that has higher anti-noise and anti-interference capabilities than the common symbol, and carries other types of data in the data to be sent in the common symbol. By means of the technical solution in this embodiment of the present invention, depending on the type of the data to be sent, the data to be sent can be carried in the highly robust symbol or the common symbol for sending. Therefore, different types of data are separately carried in different symbols for sending, and efficiency of data management can be effectively improved.

FIG 9 is a schematic structural diagram of a data modulation apparatus according to another embodiment of the present invention. As shown in FIG 9, the data modulation apparatus in this embodiment may further include the following technical solution on the basis of the embodiment shown in FIG 8:

As shown in FIG 9, the data modulation apparatus in this embodiment further includes a determining module 12, where the determining module is configured to determine a highly robust symbol. Further, the determining module 12 is specifically configured to use a symbol with modulation and demodulation parameters that can identify higher anti-noise and anti-interference capabilities as the highly robust symbol, where the modulation and demodulation parameters include a bit carrying table, an FEC configuration parameter and/or an interleaving parameter. In this embodiment, a carrying module 11 is further connected to the determining module 12. The carrying module 11 is configured to carry at least one type of data in data to be sent in the highly robust symbol determined by the determining module 12, where the at least one type of data is recognized by a recognizing module 10, and carry other types of data in the data to be sent in a common symbol.

The determining module 12 in the data modulation apparatus in this embodiment is specifically configured to determine the modulation and demodulation parameters of the highly robust symbol that can identify higher anti-noise and anti-interference capabilities, where the modulation and demodulation parameters include at least one of the bit carrying table, the FEC configuration parameter and the interleaving parameter.

As shown in FIG 9, further, optionally, the data modulation apparatus in this embodiment further includes a sending module 13. The sending module 13 is connected to the determining module 12, and the sending module 13 is configured to send the modulation and demodulation parameters of the highly robust symbol, which are determined by the determining module 12, to a communication peer end. Optionally, the determining module 12 in the data modulation apparatus in this embodiment is specifically configured to: determine a bit carrying table of the highly robust symbol according to a predetermined bit carrying manner of the highly robust symbol, and a signal-to-noise ratio and a signal-to-noise ratio margin of each tone corresponding to the highly robust symbol; and then determine an FEC configuration parameter and/or an interleaving parameter according to at least one of the bit carrying table, an impulse noise protection capability of the highly robust symbol and a data latency of the highly robust symbol.

Optionally, the determining module 12 in the data modulation apparatus in this embodiment may further be specifically configured to: determine a bit carrying table according to a predetermined bit carrying manner, and a signal-to-noise ratio and a signal-to-noise ratio margin of each tone corresponding to the predetermined bit carrying manner; and then determine an FEC configuration parameter and/or an interleaving parameter according to at least one of the bit carrying table, an impulse noise protection capability and a data latency; and use a symbol corresponding to the determined bit carrying table, the FEC configuration parameter and/or the interleaving parameter as the highly robust symbol.

Alternatively, optionally, the determining module 12 in the data modulation apparatus in this embodiment may further include a processing unit and a determining unit. The processing unit is configured to decrease a bit value carried in each tone in a bit carrying table of the common symbol to obtain the bit carrying table, and determine the FEC configuration parameter and/or the interleaving parameter according to at least one of the bit carrying table, an impulse noise protection capability, and a required data latency; the determining unit is connected to the processing unit, and the determining unit is configured to use a symbol corresponding to the bit carrying table, the FEC configuration parameter and/or the interleaving parameter, which are determined by the processing unit, as the highly robust symbol.

Further, optionally, as shown in FIG 9, the data modulation apparatus in this embodiment further includes a detecting module 14, which is connected to the determining module 12. The detecting module 14 is configured to: in a data receiving or sending process, detect whether the signal-to-noise ratio margin of each tone in the highly robust symbol determined by the determining module 12 is less than a preset threshold; the detecting module 14 is configured to: when it is detected that the signal-to-noise ratio margin of a certain tone is less than the corresponding preset threshold, trigger the determining module 12 to determine the modulation and demodulation parameters of the highly robust symbol that can identify anti-noise and anti-interference capabilities again.

Optionally, the type of the data to be sent in this embodiment includes management data, service data, a priority level, a crosstalk measurement signal, a signal-to-noise ratio detection signal or an RTP packet.

Further, optionally, the carrying module 11 in the data modulation apparatus in this embodiment is further configured to carry the crosstalk measurement signal in the highly robust symbol for sending. Specifically, the carrying module 11 is specifically configured to carry the crosstalk measurement signal in a tone of the highly robust symbol for sending. Alternatively, the carrying module 11 is further configured to carry the crosstalk measurement signal in a corresponding bit tone in the highly robust symbol for sending, where the corresponding bit tone does not belong to the bit carrying table of the highly robust symbol.

Further, optionally, the carrying module 11 in the data modulation apparatus in this embodiment is further configured to carry the signal-to-noise ratio detection signal in a tone of the highly robust symbol for sending. Alternatively, optionally, the carrying module 11 is further configured to carry the signal-to-noise ratio detection signal in a corresponding bit tone in the highly robust symbol for sending, where the corresponding bit tone does not belong to the bit carrying table of the highly robust symbol.

It should be noted that in the technical solution in the foregoing embodiment, the highly robust symbol and the common symbol, which carry the data to be sent, are sent alternately.

It should be noted that in the technical solution in the foregoing embodiment, the data to be sent includes management data and/or service data.

For the data modulation apparatus shown in FIG. 9, the technical solution in the present invention is described by assuming that all the foregoing optional technical solutions are included. In a practical application, the foregoing optional technical solutions may be combined at random in a combination manner to form an optional embodiment of the present invention, and details are not described herein again.

The method used by the data modulation apparatus in this embodiment to implement data modulation by using the foregoing modules is the same as implementation mechanisms in the foregoing related method embodiments. For details, reference may be made to the description in the related method embodiments, and details are not described herein again.

The data modulation apparatus in this embodiment uses the foregoing modules to recognize the type of the data to be sent, carries at least one type of data in the data to be sent in the highly robust symbol that has higher anti-noise and anti-interference capabilities than the common symbol, and carries other types of data in the data to be sent in the common symbol. By means of the technical solution in this embodiment of the present invention, depending on the type of the data to be sent, the data to be sent can be carried in the highly robust symbol or the common symbol for sending. Therefore, different types of data are separately carried in different symbols for sending, and efficiency of data management can be effectively improved.

FIG. 10 is a schematic structural diagram of a data processing system according to an embodiment of the present invention. As shown in FIG 10, the data processing system in this embodiment may specifically include a data modulation apparatus 30 and a data receiving apparatus 40.

The data modulation apparatus 30 in the data processing system in this embodiment may be the data modulation apparatus in the embodiment shown in FIG. 8 or FIG 9; the data receiving apparatus 40 is configured to receive data carried in a highly robust symbol from the data modulation apparatus 30.

Specifically, when the data modulation apparatus 30, which is the data modulation apparatus in the embodiment shown in FIG. 8 or FIG 9, may be used to implement data modulation, a data modulation method in any embodiment shown in FIG 2 to FIG 5 may be specifically used to carry at least one type of data in data to be sent in a highly robust symbol, and carry other types of data in the data to be sent in a common symbol, thereby implementing data modulation. For details, reference may be made to the description in the foregoing related embodiments, and details are not described herein again.

The data processing system in this embodiment uses the foregoing data modulation apparatus to recognize the type of the data to be sent, carries at least one type of data in the data to be sent in the highly robust symbol that has higher anti-noise and anti-interference capabilities than the common symbol, and carries other types of data in the data to be sent in the common symbol. By means of the technical solution in this embodiment, depending on the type of the data to be sent, the data to be sent can be carried in the highly robust symbol or the common symbol for sending. Therefore, different types of data are separately carried in different symbols for sending, and efficiency of data management can be effectively improved.

The described apparatus embodiment is merely exemplary. The units described as separate parts may or may not be physically separate, and parts displayed as units may or may not be physical units, may be located in one position, or may be distributed on at least two network units. A part or all of the modules may be selected according to actual needs to achieve the objectives of the solutions of the embodiments. A person of ordinary skill in the art may understand and implement the embodiments of the present invention without creative efforts.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1. A data modulation method, comprising:

    recognizing a type of data to be sent, wherein the data to be sent comprises multiple types of data; and
    carrying at least one type of data in the data to be sent in a highly robust symbol, and carrying other types of data in the data to be sent in a common symbol, wherein the highly robust symbol is a symbol that has higher anti-noise and anti-interference capabilities than the common symbol.

2. The method according to claim 1, further comprising: determining the highly robust symbol; and
    further, the determining the highly robust symbol comprises:

    using a symbol with modulation and demodulation parameters that can identify higher anti-noise and anti-interference capabilities as the highly robust symbol, wherein the modulation and demodulation parameters comprise a bit carrying table, a forward error correction configuration parameter and/or an interleaving parameter.

3. The method according to claim 2, wherein the method further comprises:

sending the modulation and demodulation parameters of the highly robust symbol to a communication peer end.

4. The method according to claim 2, wherein the using a symbol with modulation and demodulation parameters that can identify higher anti-noise and anti-interference capabilities as the highly robust symbol comprises:

determining the bit carrying table according to a predetermined bit carrying manner, and a signal-to-noise ratio and a signal-to-noise ratio margin of each tone corresponding to the predetermined bit carrying manner; and then determining the forward error correction configuration parameter and/or the interleaving parameter according to at least one of the bit carrying table, an impulse noise protection capability and a data latency; and using a symbol corresponding to the determined bit carrying table, the forward error correction configuration parameter and/or the interleaving parameter as the highly robust symbol.

5. The method according to claim 2, wherein the using a symbol with modulation and demodulation parameters that can identify higher anti-noise and anti-interference capabilities as the highly robust symbol comprises:

determining the modulation and demodulation parameters according to a required signal-to-noise ratio margin or according to at least one of the required signal-to-noise ratio margin, a required rate, an impulse noise protection capability, and a required data latency; and using a symbol corresponding to the modulation and demodulation parameters as the highly robust symbol.

6. The method according to claim 2, wherein the using a symbol with modulation and demodulation parameters that can identify higher anti-noise and anti-interference capabilities as the highly robust symbol comprises:

decreasing a bit value carried in each tone in a bit carrying table of the common symbol to obtain the bit carrying table; determining the forward error correction configuration parameter and/or the interleaving parameter according to at least one of the bit carrying table, an impulse noise protection capability, and a required data latency; and using a symbol corresponding to the determined bit carrying table, the forward error correction configuration parameter and/or the interleaving parameter as the highly robust symbol.

7. The method according to any one of claims 2 to 6, further comprising:

in a data receiving or sending process, detecting whether the signal-to-noise ratio margin of each tone in the highly robust symbol is less than a preset threshold; and when the signal-to-noise ratio margin of a certain tone is less than the corresponding preset threshold, determining the modulation and demodulation parameters of the highly robust symbol again.

8. The method according to any one of claims 1 to 6, wherein the type of the data to be sent comprises management data, service data, a priority level, a crosstalk measurement signal, a signal-to-noise ratio detection signal or a Real-Time Transport Protocol packet.

9. A data modulation apparatus, comprising:

a recognizing module, configured to recognize a type of data to be sent, wherein the data to be sent comprises multiple types of data; and a carrying module, configured to carry at least one type of data in the data to be sent in a highly robust symbol, and carry other types of data in the data to be sent in a common symbol, wherein the highly robust symbol is a symbol that has higher anti-noise and anti-interference capabilities than the common symbol.

10. The apparatus according to claim 9, wherein the apparatus further comprises:

a determining module, configured to determine the highly robust symbol; and further, the determining module is specifically configured to use a symbol with modulation and demodulation parameters that can identify higher anti-noise and anti-interference capabilities as the highly robust symbol, wherein the modulation and demodulation parameters comprise a bit carrying table, a forward error correction configuration parameter and/or an interleaving parameter.

11. The apparatus according to claim 10, further comprising:

a sending module, configured to send the modulation and demodulation parameters of the highly robust symbol to a communication peer end.

12. The apparatus according to claim 10, wherein the determining module is specifically configured to: determine the bit carrying table according to a predetermined bit carrying manner, and a signal-to-noise ratio and a signal-to-noise ratio margin of each tone corresponding to the predetermined bit carrying manner; and then determine the forward error correction configuration parameter and/or the interleaving parameter according to at least one of the bit carrying table, an impulse noise protection capability and a data latency; and use a symbol corresponding to the determined bit carrying table, the forward error correction configuration parameter and/or the interleaving parameter as the highly robust symbol.

13. The apparatus according to claim 12, wherein the determining module is specifically configured to: determine the modulation and demodulation parameters according to a required signal-to-noise ratio margin or according to at least one of the required signal-to-noise ratio margin, a required rate, an impulse noise protection capability, and a required data latency; and use a symbol corresponding to the modulation and demodulation parameters as the highly robust symbol.

14. The apparatus according to claim 13, wherein the determining module comprises:

a processing unit, configured to: decrease a bit value carried in each tone in a bit carrying table of the common symbol to obtain the bit carrying table; and determine the forward error correction configuration parameter and/or the interleaving parameter according to at least one of the bit carrying table, an impulse noise protection capability, and a required data latency; and
a determining unit, configured to use a symbol corresponding to the determined bit carrying table, the forward error correction configuration parameter and/or the interleaving parameter as the highly robust symbol.

15. The apparatus according to any one of claims 10 to 14, further comprising:

a detecting module, configured to: in a data receiving or sending process, detect whether the signal-to-noise ratio margin of each tone in the highly robust symbol is less than a preset threshold; and
the detecting module is connected to the determining module, and the detecting module is configured to: when it is detected that the signal-to-noise ratio margin of a certain tone is less than the corresponding preset threshold, trigger the determining module to determine the modulation and demodulation parameters of the highly robust symbol again.

16. The apparatus according to any one of claims 9 to 14, wherein the type of the data to be sent comprises management data, service data, a priority level, a crosstalk measurement signal, a signal-to-noise ratio detection signal or a Real-Time Transport Protocol packet.

17. A data processing system, comprising a data modulation apparatus and a data receiving apparatus, wherein:

the data modulation apparatus is the data modulation apparatus according to any one of claims 9 to 16; and
the data receiving apparatus is configured to receive data carried in the highly robust symbol from the data modulation apparatus.

FIG. 1

| Recognize a type of data to be sent | 100 |

| Carry at least one type of data in the data to be sent in a highly robust symbol, and carry other types of data in the data to be sent in a common symbol | 101 |

FIG. 2

| A data modulation apparatus determines a bit carrying table according to a predetermined bit carrying manner, and a signal-to-noise ratio and a signal-to-noise ratio margin of each tone corresponding to the predetermined bit carrying manner, and then determines an FEC configuration parameter and/or an interleaving parameter according to at least one of the bit carrying table, an impulse noise protection capability and a data latency | 200 |

| Use a symbol corresponding to the determined bit carrying table, the FEC configuration parameter and/or the interleaving parameter as a highly robust symbol | 201 |

| The data modulation apparatus sends modulation and demodulation parameters of the highly robust symbol to a communication peer end | 202 |

| The data modulation apparatus recognizes a priority of each piece of data to be sent | 203 |

| The data modulation apparatus carries the data to be sent whose priority is greater than or equal to a preset priority threshold in the highly robust symbol, and carries the data whose priority is less than the preset priority threshold in a common symbol | 204 |

205

Not less than the preset threshold ◁— The data modulation apparatus detects whether a signal-to-noise ratio margin of each tone in the highly robust symbol is less than a preset threshold —▷ Less than the preset threshold

FIG. 3

A data modulation apparatus determines modulation and demodulation parameters according to a required signal-to-noise ratio margin or according to at least one of the required signal-to-noise ratio margin, a rate requirement, an impulse noise protection capability, and a data latency requirement, and uses a symbol corresponding to the modulation and demodulation parameters as a highly robust symbol                          300

The data modulation apparatus sends the modulation and demodulation parameters of the highly robust symbol to a communication peer end                          301

The data modulation apparatus recognizes a type of each piece of data to be sent                          302

304

Not less than the preset threshold

The data modulation apparatus detects whether a signal-to-noise ratio margin of each tone in the highly robust symbol is less than a preset threshold

Less than the preset threshold

FIG. 4

A data modulation apparatus decreases a bit value carried in each tone in a bit carrying table of a common symbol to obtain the bit carrying table, and determines an FEC configuration parameter and/or an interleaving parameter according to at least one of the bit carrying table, an impulse noise protection capability, and a data latency requirement — 400

The data modulation apparatus uses a symbol corresponding to the determined bit carrying table, the FEC configuration parameter and/or the interleaving parameter as a highly robust symbol — 401

The data modulation apparatus sends the modulation and demodulation parameters of the highly robust symbol to a communication peer end — 402

The data modulation apparatus recognizes a type of each piece of data to be sent — 403

According to the type of the data, the data modulation apparatus carries each piece of the data to be sent in the common symbol or the highly robust symbol — 404

405

Not less than a preset threshold

In a data receiving or sending process, the data modulation apparatus detects whether a signal-to-noise ratio margin of each tone in the highly robust symbol is less than a preset threshold

Less than a preset threshold

FIG. 5

Tone Number

N
| OAM signal |
| Crosstalk measurement signal |
| OAM signal |
| OAM signal |
| OAM signal |
n
| Crosstalk measurement signal |

1

FIG. 6

Tone
Number

| | |
|---|---|
| | Crosstalk measurement signal |
| | Crosstalk measurement signal |
| N | Crosstalk measurement signal |
| | Crosstalk measurement signal |
| | OAM signal |
| | OAM signal |
| | OAM signal |
| n | Crosstalk measurement signal |
| | |
| | OAM signal |
| | OAM signal |
| 1 | |

FIG. 7

```
                  11                        10
          ┌──────────────┐        ┌──────────────┐
          │   Carrying   │        │  Recognizing │
          │    module    │────────│    module    │
          └──────────────┘        └──────────────┘
                                                       0
```

FIG. 8

```
        14                  12                  11                  10
 ┌──────────────┐  ┌──────────────┐  ┌──────────────┐  ┌──────────────┐
 │   Detecting  │  │  Determining │  │   Carrying   │  │  Recognizing │
 │    module    │──│    module    │──│    module    │──│    module    │
 └──────────────┘  └──────┬───────┘  └──────────────┘  └──────────────┘
                          │                 13
                   ┌──────────────┐
                   │   Sending    │
                   │    module    │
                   └──────────────┘
```

FIG. 9

```
              30                             40
 ┌──────────────────────┐      ┌──────────────────────────┐
 │   Data modulation    │      │                          │
 │     apparatus        │──────│ Data receiving apparatus  │
 └──────────────────────┘      └──────────────────────────┘
```

FIG. 10